# EUROPÄISCHE PATENTSCHRIFT

(11) **EP 1 585 951 B1**
(45) Veröffentlichungstag und Bekanntmachung des Hinweises auf die Patenterteilung: **17.06.2009**
(21) Anmeldenummer: 04701590.4
(22) Anmeldetag: 13.01.2004
(51) Int. Cl.: G01M 3/20, F04D 25/16, F04D 19/04

(54) **LECKSUCHGER T MIT EINEM EINLASS**
LEAK DETECTOR COMPRISING AN INLET
DETECTEUR DE FUITES MUNI D'UNE ADMISSION

(30) Priorität: 25.01.2003 DE 10302987
(43) Veröffentlichungstag der Anmeldung: 19.10.2005
(73) Patentinhaber: Inficon GmbH, 50968 Köln (DE)
(72) Erfinder: BÖHM, Thomas, 50859 Köln (DE)
(74) Vertreter: Leineweber, Jürgen
(86) Internationale Anmeldenummer: PCT/EP2004/000161
(87) Internationale Veröffentlichungsnummer: WO 2004/068099

(56) Entgegenhaltungen:
- DE-A- 3 124 205
- DE-A- 4 228 313
- US-A- 5 707 213
- US-A- 5 708 194

## Beschreibung

Die Erfindung bezieht sich auf ein Lecksuchgerät mit den Merkmalen des Oberbegriffs des Patentanspruchs 1.

Lecksuchgeräte dieser Art sind aus den Druckschriften DE-C2 31 24 205, DE-A1 42 28 313 und DE-A1 195 23 430 bekannt. Es handelt sich um Gegenstrom-Lecksuchgeräte, die üblicherweise mit Helium als Testgas betrieben werden. Während des Lecksuch-Betriebs strömt Gas, das im Falle eines defekten Prüflings Testgas enthält, über eine Leitung vom Einlass des Lecksuchgerätes zur Vorvakuumpumpe. Diese Leitung steht über Leitungsabschnitte mit mindestens dem Auslassbereich der Hochvakuumpumpe, vorzugsweise auch mit einer Druckstufe, in Verbindung. Je nach dem, welcher der Leitungsabschnitte offen ist, findet eine Lecksuche mit unterschiedlichen Empfindlichkeiten statt.

Generell besteht das Problem, dass bei Lecksuchgeräten dieser Art die Ansprechzeit, d. h., die Zeit, die vom Zeitpunkt des Eintritts von Testgas in den Einlass des Lecksuchgerätes bis zum Zeitpunkt der Registrierung des Testgases vergeht, relativ lang ist, und zwar insbesondere bei höheren Drücken. Aus der EP-B1 752 095 ist ein Lecksuchgerät bekannt, bei dem sein Einlass über eine Testgasleitung mit einer Gasförderpumpe verbunden ist. Als Verbindung der Testgasleitung mit dem Auslassbereich der Hochvakuumpumpe ist ein Anschlussstutzen mit einer Koaxialleitung vorgesehen. Eine solche Lösung ist konstruktiv aufwendig und hat einen begrenzten Leitwert.

Der vorliegenden Erfindung liegt die Aufgabe zugrunde, die gewünschte Verkürzung der Ansprechzeit bei der Gegenstromlecksuche im oberen Druckbereich durch eine einfachere Lösung zu erreichen.

Erfindungsgemäß wird diese Aufgabe durch die kennzeichnenden Merkmale der Patentansprüche erreicht.

Dadurch, dass das gesamte, im Falle eines defekten Prüflings Testgas enthaltende Gas durch den Auslassbereich der Hochvakuumpumpe (bzw. durch eine Druckstufe) strömt, wird die Strecke, durch die das Testgas diffundieren muss, und damit die Ansprechzeit auf ein Minimum verkürzt.

Weitere Vorteile und Einzelheiten der Erfindung sollen an Hand von in den Figuren 1 bis 3 schematisch dargestellten Ausführungsbeispielen erläutert werden. Es zeigen
- Figur 1 ein Lecksuchgerät mit einer als Compoundpumpe ausgebildeten Hochvakuumpumpe, deren Molekularpumpe einstufig ausgebildet ist sowie
- Figuren 2 und 3 (Figur 2 sehr schematisch) jeweils ein Lecksuchgerät nach der Erfindung mit einer Compoundpumpe, deren Molekularpumpstufe ihrerseits mehrstufig ausgebildet ist.

Bestandteile der dargestellten Lecksuchgeräte 1 mit ihrem Einlass 2 sind die Hochvakuumpumpe 3, ausgebildet als Compound-Reibungspumpe. Compound-Reibungspumpe bedeutet, dass sie eine Turbomolekularpumpstufe und eine Molekularpumpstufe besitzt. Vorzugsweise sind Pumpen dieser Art einflutig ausgebildet, d. h., ihre Stufen sind axial hintereinander in Förderrichtung angeordnet.

Das äußere Gehäuse der Hochvakuumpumpe 3 ist mit 11 bezeichnet. Es ist mit einer zentralen, nach innen hineinragenden Lagerbuchse 12 ausgerüstet, in der sich eine Welle 13 z.B. mittels einer Spindellagerung 14 abstützt. Mit der Welle 13 gekoppelt sind der Antriebsmotor 15, der Rotor 16 einer Molekularpumpenstufe sowie der Rotor 17 einer Turbomolekularpumpenstufe. Basis der Pumpe ist ein Chassis 20, auf dem sich das Gehäuse 11, die Lagerbuchse 12 und der Stator des Antriebsmotors 15 abstützen.

Der Rotor 17 ist mit den Rotorschaufeln 18 ausgerüstet, die gemeinsam mit den im Gehäuse 11 gehalterten Statorschaufeln 19 die Turbomolekularpumpenstufe bilden. Mittels des Flansches 4 ist die Pumpe an den nur schematisch dargestellten Testgasdetektor 6, üblicherweise ein Massenspektrometer, angeschlossen.

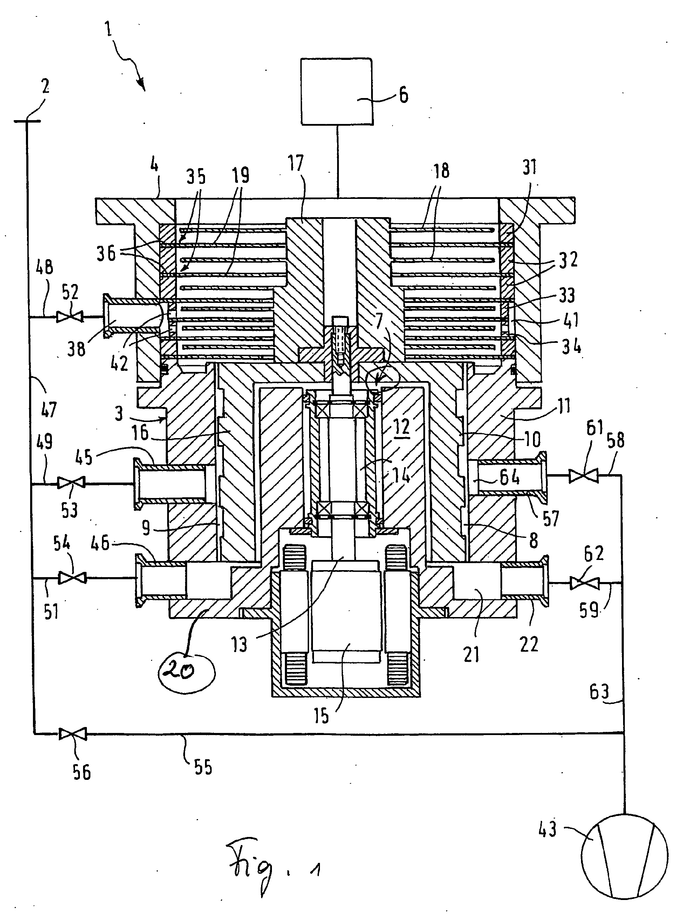

Beim Ausführungsbeispiel nach Figur 1 umfasst die Molekularpumpe (bzw. -pumpenstufe) den den Motor-/Lagerraum 7 übergreifenden, glockenförmigen Rotor 16, der auf seiner Außenseite mit gewindeähnlichen Nuten 8 ausgerüstet ist, in denen beim Betrieb der Pumpe die Gasförderung von der Hochvakuumseite zur Vorvakuumseite stattfindet. Dem Rotor 16 ist ein axial etwa gleich langer Stator 9 zugeordnet. Zwischen dem Stator 9 und dem Rotor 16 befindet sich der Spalt 10. Dieser muss möglichst klein sein, um eine gute Abdichtung zwischen den Gewindenuten zu erreichen. An den Vorvakuumraum 21 ist der Vorvakuumstutzen 22 angeschlossen. Die Vorvakuumpumpe ist mit 43 bezeichnet.

Zum Stator 31 der Turbomolekularpumpenstufe 18/19 gehören die Statorschaufeln 19 und Distanzringe 32 bis 34. Die Statorschaufeln 19 sind in an sich bekannter Weise Bestandteile von Schaufelringen oder Schaufelringabschnitten 35 mit äußeren Rändern 36, die sich in montiertem Zustand des Stators zwischen den Distanzringen befinden. Der aus abwechselnd übereinander angeordneten Distanzringen 32 und Schaufelringen 35 aufgebaute Stator wird durch das äußere Gehäuse 11 zentriert.

In Figur 1 ist als Beispiel eine Compoundpumpe dargestellt, die die angesaugten Gase (Einlassflansch 4) entlang der Längsachse der Pumpe einflutig in Richtung Chassis 20 fördert. Im Rahmen der Erfindung kann die Hochvakuumpumpe auch vollständig als Turbomolekularpumpe oder Molekularpumpe ausgebildet sein.

Die Turbomolekularpumpenstufe 18, 19 ist mit einem Zwischeneinlass 38 ausgerüstet, der dem Testgaseinlass beim Einsatz der Pumpe in einem Gegenstromlecksucher dient. Die in Höhe des Zwischeneinlasses 38 befindlichen Distanzringe 33, 34 sind gegenüber den übrigen Distanzringen 32 modifiziert. Einer oder beide Distanzringe 33 bzw. 34 weisen einen reduzierten Außendurchmesser auf und bilden gemeinsam mit dem Gehäuse 11 den umlaufenden Ringkanal 41, in den der Zwischeneinlass 38 mündet. Der oder die Distanzringe 33 bzw. 34 mit reduziertem Außendurchmesser weisen ferner Durchbrechungen 42 auf, über die die Verbindung des Förderraumes der Turbomolekularpumpenstufe mit dem Zwischeneinlass 38 hergestellt wird. Diese Durchbrechungen können z. B. mehrere Bohrungen sein, wie beim Distanzring 34 dargestellt. Eine andere Möglichkeit besteht darin, einen Distanzring 33 derart auszufräsen, dass er abschnittsweise eine reduzierte (axiale) Höhe aufweist. Die Herstellung von Durchbrechungen mit hohem Leitwert ist dadurch möglich.

Ein weiterer Testgaseinlass 45 befindet sich in Höhe der Molekularpumpstufe 9/16, und zwar etwa auf halber Höhe dieser Pumpstufe. Ein weiterer Testgaseinlass 46 ist schließlich in Höhe des Auslassbereichs der Hochvakuumpumpe 3 angeordnet. Er mündet in den im wesentlichen ringförmigen Vorvakuumraum 21, der sich an den Pumpquerschnitt, dem Spalt 10, anschließt.

Wie bei den Lecksuchgeräten nach dem Stand der Technik schließt sich an den Einlass 2 des Lecksuchgerätes 1 die Testgasleitung 47 an, die über die Leitungsabschnitte 48, 49, 51, jeweils mit einem Ventil 52, 53 bzw. 54, mit den Testgaseinlässen 38, 45, 46 in Verbindung steht. Weiterhin steht die Testgasleitung 47 über den Leitungsabschnitt 55 mit dem Ventil 56 mit der Vorvakuumpumpe 43 in Verbindung.

In Höhe der Anschlussstutzen 45 und 46 befinden sich die weiteren Anschlussstutzen 57 und 22. Sie stehen über die Leitungsabschnitte 58, 59, jeweils mit einem Ventil 61 bzw. 62, mit der Vorvakuumleitung 63 in Verbindung, in die auch der Leitungsabschnitt 55 mündet.

An den Einlass 2 kann ein Prüfling, der von außen mit Testgas besprüht wird, oder eine Kammer mit einem oder mehreren Prüflingen angeschlossen werden, die jeweils Testgas enthalten. Die Lecksuche erfolgt in der Weise, dass zunächst der Prüfling bzw. die Prüfkammer bei offenem Ventil 56 - alle übrigen Ventile sind geschlossen - vorevakuiert wird. Die Groblecksuche kann sehr früh beginnen, und zwar durch Öffnen der Ventile 54 und 62.

Nahezu das gesamte in der Testgasleitung strömende Gas, bei geschlossenem Ventil 56 die gesamte Gasmenge, strömt durch den zweckmäßig als Ringkanal ausgebildeten Vorvakuumraum 21. Im strömenden Gas enthaltenes Testgas gelangt damit schneller und mit höherer Konzentration als beim Stand der Technik in den Vorvakuumbereich der Hochvakuumpumpe und damit auch schneller zum Testgasdetektor 6.

Eine noch höhere Empfindlichkeitsstufe wird erreicht, wenn das Ventil 54 - zweckmäßig auch das Ventil 62 - geschlossen und die Ventile 53, 61 geöffnet werden. Auch das Ventil 56 ist - wie bereits erwähnt - geschlossen. In diesem Betriebszustand strömt das gesamte durch die Testgasleitung 47 strömende Gas auf etwa halber Höhe durch die Molkularpumpstufe 9, 16. In Höhe der Anschlussstutzen 45, 57 befindet sich zweckmäßig ein Ringkanal 64, um den Strömungswiderstand zu reduzieren.

Schließlich wird die höchste Empfindlichkeitsstufe der Lecksuche in an sich bekannter Weise durch Öffnen des Ventils 52 erreicht. Der Druck der Hochvakuumpumpe an dieser Stelle ist niedrig (z. B. ≤ 10⁻¹ mbar) und damit die Diffusionsgeschwindigkeit des Testgases hoch. Eine spürbare Verbesserung der Ansprechzeit würde nicht erreicht, wenn das gesamte in der Testgasleitung 47 strömende Gas die Turbomolekularpumpstufe an dieser durchströmen würde.

Zweckmäßig liegen die Anschlussstutzen 46, 22 (bzw. 45, 57) einander gegenüber, damit eventuell vorhandenes Testgas möglichst schnell den gesamten Austrittsquerschnitt (Spalt 10 beim dargestellten Ausführungsbeispiel oder, wenn nur Schaufelstufen vorhanden sind, die auslassseitigen Schaufeln) erreicht. Sehr gute Ergebnisse werden allerdings auch noch erreicht, wenn die Achsen der Anschlüsse einen Winkel von 90° (und weniger) bilden.

Eine wesentliche Verkürzung der Ansprechzeit wird bereits dadurch erreicht, dass für den Anschluss der Vorvakuumpumpe 43 und für die Zuführung des gegebenenfalls Testgas enthaltenen Gases zum Vorvakuumbereich der Hochvakuumpumpe 1 zwei separate Anschlussstutzen 22, 46 vorhanden sind. Dieser Vorteil besteht auch dann, wenn die Anschlussstutzen 45 und 57 sowie die zugehörigen Anschlussleitungen 49, 58 mit ihren Ventilen 52, 61 nicht vorhanden sind.

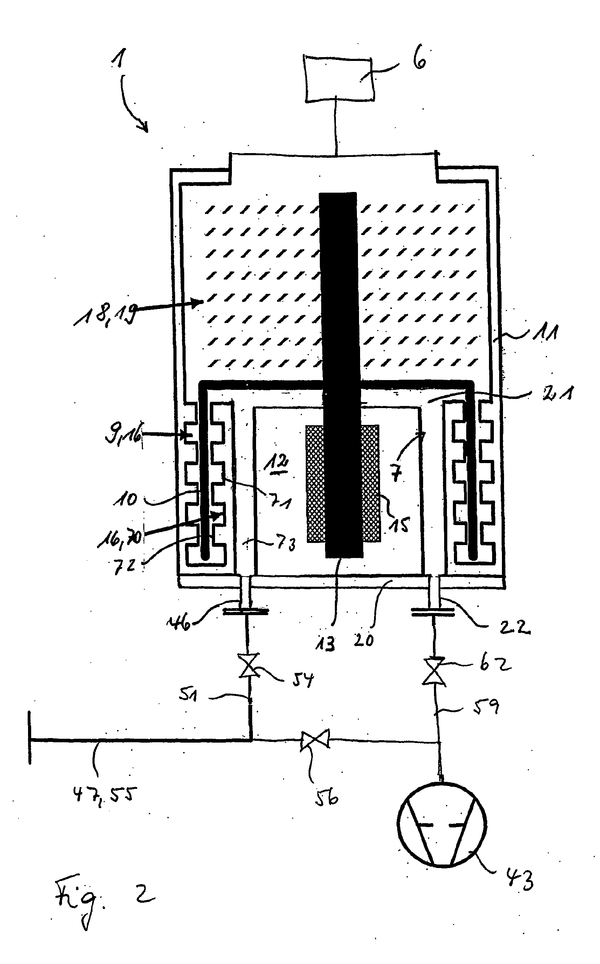

Figur 2 zeigt stark schematisch eine Lecksucheinrichtung nach der Erfindung mit einer Compoundpumpe. Sie besitzt die Turbomolekularpumpstufe 18, 19 und die Molekularpumpstufe 9, 16, an die sich eine weitere Molekularpumpstufe anschließt. Dazu ist der glockenförmige Rotor mit einem glatten Zylinderabschnitt ausgerüstet. Seiner Wandung ist von außen der Statorabschnitt 9, versehen mit einem Gewinde, zugeordnet, der mit der äußeren Wandung des Rotors 9 den Pumpspalt 10 bildet. Ein weiterer Statorabschnitt 70 mit seinem Gewinde 71 ist der Innenseite des Rotorzylinders zugeordnet. Dieser Molekularpumpenabschnitt 16, 70 ist so ausgebildet, dass die Richtung der im Pumpspalt 72 geförderten Gase der Förderrichtung im Spalt 10 entgegen gerichtet ist. Dadurch ergibt es sich, dass der Austrittsbereich 21 der Hochvakuumpumpe vom Chassis 20 beabstandet ist. Er befindet sich oberhalb der Lagerbuchse 12 und hat im wesentlichen eine zylindrische Form. Über einem die Lagerbuchse 12 umgebenden Ringraum 73 steht er mit den Ausschlussstutzen 46, 22 in Verbindung, die am Chassis 20 angeordnet sind. Austrittsbereich 21 und Ringraum 73 sind Bestandteile des Lager-/Motorraumes 7.

Beim Ausführungsbeispiel nach Figur 2 steht der Einlass 2 des Lecksuchgerätes 1 über die Leitung 47, 55 mit dem Anschlussstutzen 46 in Verbindung. Während der Lecksuche strömt gegebenenfalls Testgas enthaltendes Gas durch den Anschlussstutzen 46 über den Ringraum 73 bis zum Austrittsbereich 21 und wird von dort aus wieder über den Ringraum 73 und den Anschlussstutzen 22 zur Vorvakuumpumpe 43. Damit es über chassis-nahe Bereiche des Ringraumes 73 nicht zu Strömungs-Kurzschlüssen zwischen den Stutzen 46 und 22 kommt, ist es zweckmäßig, wenn der Ringraum 73 nicht dargestellte Trennmittel, z.B. sich axial erstreckende Trennwände, aufweist, mit deren Hilfe sichergestellt ist, dass die gesamte in dem Anschlussstutzen 46 eintretende Gasmenge durch den Austrittsbereich 21 der Hochvakuumpumpe gefördert wird.

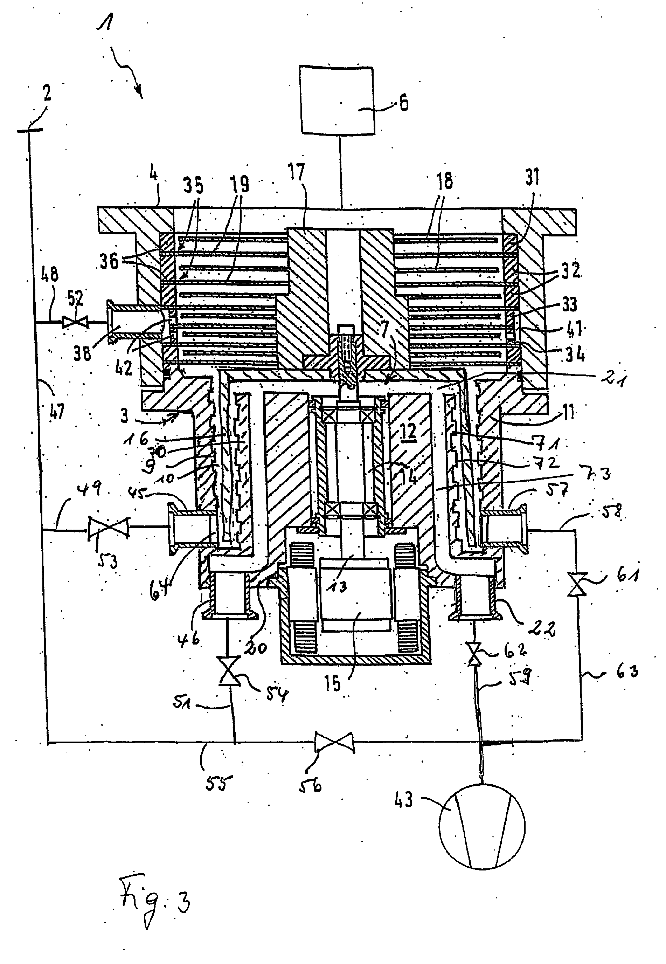

Figur 3 zeigt ein Ausführungsbeispiel, bei der wie beim Ausführungsbeispiel nach Figur 2 die Molekularpumpe zweistufig ausgebildet ist. Neben den Anschlüssen 46 und 22 sind - wie beim Ausführungsbeispiel nach Figur 1 - die weiteren Anschlüsse 38, 45 und 57 vorhanden. Die Anschlüsse 45 und 57 münden in den Förderraum der zweistufigen Molekularpumpstufe, und zwar im Bereich des Überganges dieser Stufen 16, 9 und 16, 70, d. h., dort, wo die strömenden Gase ihre Richtung um etwa 180° ändern.

## Patentansprüche

1. Lecksuchgerät (1) mit einem Einlass (2), mit einer Hochvakuumpumpe (3), mit einem am Eintritt der Hochvakuumpumpe (3) angeschlossenen Testgasdetektor (6), mit einer an den Austrittsbereich (21) der Hochvakuumpumpe (3) angeschlossenen Vorvakuumpumpe (43) sowie mit einer Testgasleitung (47, 55) zwischen dem Einlass (2) des Lecksuchgerätes (1) und der Vorvakuumpumpe (43), welche über einen Leitungsabschnitt (51) mit dem Austrittsbereich (21) der Hochvakuumpumpe (3) in Verbindung steht, **dadurch gekennzeichnet, dass** die Leitung (51) und die Vorvakuumpumpe (43) über separate Anschlüsse (46, 22) mit dem Austrittsbereich (21) der Hochvakuumpumpe (3) verbunden sind.

2. Lecksuchgerät nach Anspruch 1, **dadurch gekennzeichnet, dass** ein innerhalb des Gehäuses (11) der Hochvakuumpumpe (3) gelegene Austrittsraum (21) den Austrittsbereich der Hochvakuumpumpe (3) bildet und dass das Gehäuse (11) mit zwei separaten Anschlüssen (46, 22) ausgerüstet ist, die mit dem Austrittsraum (21) in Verbindung stehen.

3. Lecksuchgerät nach Anspruch 1 oder 2, **dadurch gekennzeichnet, dass** sich der Austrittsraum (21) in der Nähe eines Chassis (20) der Pumpe (3) befindet.

4. Lecksuchgerät nach Anspruch 3, **dadurch gekennzeichnet, dass** die Hochvakuumpumpe (3) einflutig ausgebildet ist und dass Einlassflansch (4) und Chassis (20) einander gegenüber liegen.

5. Lecksuchgerät nach einem der Anspruch 1 bis 4, **dadurch gekennzeichnet, dass** der Austrittsraum (21) die Form eines Ringkanals hat.

6. Lecksuchgerät nach einem der Ansprüche 1 bis 5, **dadurch gekennzeichnet, dass** die Hochvakuumpumpe (3) als Turbomolekularvakuumpumpe ausgebildet ist.

7. Lecksuchgerät nach Anspruch 6, **dadurch gekennzeichnet, dass** die Turbomolekularvakuumpumpe mit mindestens einem, vorzugsweise zwei weiteren Testgaseinlässen (38 bzw. 45), ausgerüstet ist.

8. Lecksuchgerät nach Anspruch 7, **dadurch gekennzeichnet, dass** auf der gleichen Höhe wie der Anschluss (45) ein weiterer Anschluss (57) vorgesehen ist, der mit der Vorvakuumpumpe (43) in Verbindung steht.

9. Lecksuchgerät nach einem der Ansprüche 1 bis 5, **dadurch gekennzeichnet, dass** die Hochvakuumpumpe (3) als Compound-Vakuumpumpe mit einer Turbomolekularstufe (18, 19) und einer Molekularpumpstufe (9, 16) ausgebildet ist.

10. Lecksuchgerät nach Anspruch 9, **dadurch gekennzeichnet, dass** in Höhe der Turbomolekularpumpstufe (18, 19) ein weiterer Testgaseinlass (38) vorgesehen ist.

11. Lecksuchgerät nach Anspruch 8 oder 9, **dadurch gekennzeichnet, dass** in Höhe der Molekularpumpstufe (9, 16), vorzugsweise auf der halben Höhe dieser Stufe, ein weiterer Testgasanschluss (45) vorgesehen ist.

12. Lecksuchgerät nach Anspruch 11, **dadurch gekennzeichnet, dass** auf der gleichen Höhe wie der Anschluss (45) ein weiterer Anschluss (57) vorgesehen ist, der mit der Vorvakuumpumpe (43) in Verbindung steht.

13. Lecksuchgerät nach Anspruch 10 oder 11, **dadurch gekennzeichnet, dass** sich in Höhe der Anschlussstutzen (45, 57) ein Ringkanal (64) befindet.

14. Lecksuchgerät nach einem der Ansprüche 9 bis 13, **dadurch gekennzeichnet, dass** die Molekularpumpenstufe mehrstufig ausgebildet ist.

15. Lecksuchgerät nach Anspruch 14, **dadurch gekennzeichnet, dass** sich an eine erste axial in Richtung Chassis (20) fördernde Molekularpumpstufe (9, 16) eine zweite Molekularpumpstufe (16, 70) anschließt, die eine entgegengesetzt gerichtete Förderrichtung hat, so dass der Austrittsbereich (21) der Hochvakuumpumpe (3) vom Chassis (20) beabstandet ist und über einen Ringraum (73) mit dem Anschlussstutzen (22) in Verbindung steht, an den die Vorvakuumpumpe (43) angeschlossen ist, und dass auch der über das Ventil (54) mit der Testgasleitung (47) verbundene Anschlussstutzen (16) mit dem Ringraum in Verbindung steht.

16. Lecksuchgerät nach Anspruch 15, **dadurch gekennzeichnet, dass** der Austrittsbereich (21) der Hochvakuumpumpe (3) ein im wesentlichen zylindrisch ausgebildeter Raum ist, in den die zweite Molekularpumpstufe (16, 70) mündet und der mit dem Ringraum (73) in Verbindung steht.

17. Lecksuchgerät nach Anspruch 16, **dadurch gekennzeichnet, dass** sich im Ringraum (73) axial erstreckende Trennmittel befinden, deren Lage so gewählt ist, dass voneinander getrennte Verbindungskanäle zwischen den Stutzen (46, 22) und dem Zylinderraum (21) vorhanden sind.

18. Lecksuchgerät nach einem der vorhergehenden Ansprüche, **dadurch gekennzeichnet, dass** auf gleicher Höhe befindliche Anschlussstutzen (45, 57 bzw. 46, 22) in Bezug auf die Längsachse der Pumpe seitlich angeordnet sind und einen Winkel zwischen 35° und 180° bilden.

19. Lecksuchgerät nach Anspruch 18, **dadurch gekennzeichnet, dass** die Anschlussstutzen einander gegenüber liegen.

## Claims

1. Leak indication device (1) having an inlet (2), having a high-vacuum pump (3), having a test gas detector (6) which is connected to the inlet of the high-vacuum pump (3), having a pre-vacuum pump (43) which is connected to the outlet region (21) of the high-vacuum pump (3) and having a test gas line (47, 55) between the inlet (2) of the leak indication device (1) and the pre-vacuum pump (43) which is connected to the outlet region (21) of the high-vacuum pump (3) via a line portion (51), **characterised in that** the line (51) and the pre-vacuum pump (43) are connected via separate connections (46, 22) to the outlet region (21) of the high-vacuum pump (3).

2. Leak indication device according to claim 1, **characterised in that** an outlet space (21) which is located inside the housing (11) of the high-vacuum pump (3) forms the outlet region of the high-vacuum pump (3), and **in that** the housing (11) is provided with two separate connections (46, 22) which are connected to the outlet space (21).

3. Leak indication device according to claim 1 or claim 2, **characterised in that** the outlet space (21) is located near a chassis (20) of the pump (3).

4. Leak indication device according to claim 3, **characterised in that** the high-vacuum pump (3) is constructed so as to have single flow and **in that** the inlet flange (4) and the chassis (20) are opposite each other.

5. Leak indication device according to any one of claims 1 to 4, **characterised in that** the outlet space (21) is in the form of an annular channel.

6. Leak indication device according to any one of claims 1 to 5, **characterised in that** the high-vacuum pump (3) is in the form of a turbomolecular vacuum pump.

7. Leak indication device according to claim 6, **characterised in that** the turbomolecular vacuum pump is provided with at least one, preferably two, additional test gas inlet(s) (38 and/or 45).

8. Leak indication device according to claim 7, **characterised in that** an additional connection (57) which is connected to the pre-vacuum pump (43) is provided at the same height as the connection (45).

9. Leak indication device according to any one of claims 1 to 5, **characterised in that** the high-vacuum pump (3) is in the form of a compound vacuum pump having a turbomolecular stage (18, 19) and a molecular pump stage (9, 16).

10. Leak indication device according to claim 9, **characterised in that** an additional test gas inlet (38) is provided at the height of the turbomolecular pump stage (18, 19).

11. Leak indication device according to claim 8 or claim 9, **characterised in that** an additional test gas connection (45) is provided at the height of the molecular pump stage (9, 16), preferably at half of the height of that stage.

12. Leak indication device according to claim 11, **characterised in that** an additional connection (57) which is connected to the pre-vacuum pump (43) is provided at the same height as the connection (45).

13. Leak indication device according to claim 10 or claim 11, **characterised in that** an annular channel (64) is at the height of the connection pieces (45, 57).

14. Leak indication device according to any one of claims 9 to 13, **characterised in that** the molecular pump stage is constructed so as to have a plurality of stages.

15. Leak indication device according to claim 14, **characterised in that** a second molecular pump stage (16, 70) adjoins a first molecular pump stage (9, 16) which conveys axially in the direction towards the chassis (20) and has a conveying direction which is directed in the opposite direction so that the outlet region (21) of the high-vacuum pump (3) is spaced from the chassis (20) and is connected via an annular space (73) to the connection piece (22), to which the pre-vacuum pump (43) is connected, and **in that** the connection piece (16) which is connected to the test gas line (47) via the valve (54) is also connected to the annular space.

16. Leak indication device according to claim 15, **characterised in that** the outlet region (21) of the high-vacuum pump (3) is a substantially cylindrical space, in which the second molecular pump stage (16, 70) opens and which is connected to the annular space (73).

17. Leak indication device according to claim 16, **characterised in that** there are located in the annular space (73) axially extending separation means whose position is selected in such a manner that mutually separate connection channels are provided between the connection pieces (46, 22) and the cylindrical space (21).

18. Leak indication device according to any one of the preceding claims, **characterised in that** connection pieces (45, 57 and/or 46, 22) which are located at the same height are arranged laterally in relation to the longitudinal axis of the pump and form an angle which is between 35° and 180°.

19. Leak indication device according to claim 18, **characterised in that** the connection pieces are opposite each other.

## Revendications

1. Détecteur de fuites (1) avec une admission (2), une pompe à vide poussé (3), avec un détecteur de gaz de test (6) relié à l'entrée de la pompe à vide poussé (3), avec une pompe à vide préliminaire (43) reliée à la zone de sortie (21) de la pompe à vide poussé (3) et avec une conduite de gaz de test (47, 55) entre l'admission (2) du détecteur de fuites (1) et la pompe à vide préliminaire (43) qui est en communication, par une section de conduite (51), avec la zone de sortie (21) de la pompe à vide poussé (3), **caractérisé en ce que** la conduite (51) et la pompe à vide préliminaire (43) sont reliées par des liaisons séparées (46, 22) à la zone de sortie (21) de la pompe à vide poussé (3).

2. Détecteur de fuites selon la revendication 1, **caractérisé en ce qu'**une chambre de sortie (21) ménagée à l'intérieur du boîtier (11) de la pompe à vide poussé (3) forme la zone de sortie de la pompe à vide poussé (3) et **en ce que** le boîtier (11) est équipé de deux raccords séparés (46, 22) qui sont en communication avec la chambre de sortie (21).

3. Détecteur de fuites selon la revendication 1 ou 2, **caractérisé en ce que** la chambre de sortie (21) se trouve au voisinage d'un châssis (20) de la pompe (3).

4. Détecteur de fuites selon la revendication 3, **caractérisé en ce que** la pompe à vide poussé (3) est réalisée à un seul flux et **en ce que** la bride d'entrée (4) et le châssis (20) sont en face l'un de l'autre.

5. Détecteur de fuites selon l'une des revendications 1 à 4, **caractérisé en ce que** la chambre de sortie (21) a la forme d'un canal annulaire.

6. Détecteur de fuites selon l'une des revendications 1 à 5, **caractérisé en ce que** la pompe à vide poussé (3) est réalisée sous forme de pompe à vide turbo moléculaire.

7. Détecteur de fuites selon la revendication 6, **caractérisé en ce que** la pompe à vide turbo moléculaire est pourvue d'au moins un, de préférence deux, autres entrées de gaz de test (38 ou 45).

8. Détecteur de fuites selon la revendication 7, **caractérisé en ce qu'**à la même hauteur que le raccord (45), il est prévu un autre raccard (57) qui est en communication avec la pompe à vide préliminaire (43).

9. Détecteur de fuites selon l'une des revendications 1 à 5, **caractérisé en ce que** la pompe à vide poussé (3) est réalisée sous forme de pompe à vide compound avec un étage turbo moléculaire (18, 19) et un étage de pompe turbo moléculaire (9, 16).

10. Détecteur de fuites selon la revendication 9, **caractérisé en ce qu'**à la même hauteur que l'étage de pompe turbo moléculaire (18, 19), il est prévu un autre raccord de gaz de test (38).

11. Détecteur de fuites selon l'une des revendications 1 à 5, **caractérisé en ce qu'**à la même hauteur que l'étage de pompe moléculaire (9, 16), de préférence à mi-hauteur de cet étage, il est prévu un autre raccord de gaz de test (45).

12. Détecteur de fuites selon la revendication 9, **caractérisé en ce qu'**à la même hauteur que le raccord (45), il est prévu un autre raccord de gaz de test (57, qui est en relation avec la pompe à vide préliminaire (43).

13. Détecteur de fuites selon l'une des revendications 1 à 5, **caractérisé en ce qu'**un canal annulaire (64) se trouve à la hauteur des raccords (45, 57).

14. Détecteur de fuites selon l'une des revendications 1 à 5, **caractérisé en ce que** l'étage de pompe moléculaire comporte plusieurs étages.

15. Détecteur de fuites selon la revendication 14, **caractérisé en ce qu'**à un premier étage de pompe moléculaire (9, 16) refoulant axialement en direction du châssis (20) est raccordé un second étage de pompe moléculaire (16, 70) qui a une direction de refoulement opposée, de sorte que la zone de sortie (21) de la pompe à vide poussé (3) se trouve à l'écart du châssis (20) et, par une chambre annulaire (73), en communication avec le raccord de liaison (22) auquel la pompe à vide préliminaire (43) est raccordée et **en ce que** même le raccord de liaison (16) relié à la conduite de gaz de test (47) est en communication avec la chambre annulaire.

16. Détecteur de fuites selon la revendication 15, **caractérisé en ce que** la zone de sortie (21) de la pompe à vide poussé (3) est une chambre de forme générale cylindrique dans laquelle débouche le second étage de pompe moléculaire (16, 70) et qui est en communication avec la chambre annulaire (73).

17. Détecteur de fuites selon la revendication 16, **caractérisé en ce que** des moyens de séparation s'étendant axialement se trouvent dans la chambre annulaire (73) et dont la position est choisie de façon à ménager des canaux de liaison séparés entrer eux entre les raccords (46, 22) et la chambre cylindrique (21).

18. Détecteur de fuites selon l'une des revendications précédentes, **caractérisé en ce que** des raccords de liaison (45, 57 ou 46, 22) se trouvant à la même hauteur sont disposés latéralement par rapport à l'axe longitudinal et forment un angle entre 35° et 180°.

19. Détecteur de fuites selon la revendication 18, **caractérisé en ce que** les raccords de liaison sont disposés en face les uns des autres.
